# EUROPEAN PATENT APPLICATION

(11) **EP 2 996 075 A1**
(43) Date of publication of application: **16.03.2016**
(21) Application number: 15181749.1
(22) Date of filing: 20.08.2015
(51) Int. Cl.: G06Q 10/06

(54) **METHOD FOR INTEGRATED MODELING OF A PRODUCT PORTFOLIO**

(30) Priority: 12.09.2014 AT 506372014
(71) Applicant: Siemens AG Österreich, 1210 Wien (AT)
(72) Inventor: Dhungana, Deepak, 2201 Seyring (AT); Falkner, Andreas, 1140 Wien (AT); Haselböck, Alois, 3392 Schönbühel-Aggsbach (AT)
(74) Representative: Maier, Daniel Oliver

(57) **Abstract**

The Invention is related to a method for Method for integrated modeling of a product portfolio by use of a computer, characterized by the use of Eclipse and Xtext for modeling of portfolios and system configurations.

By using the open-source frameworks Eclipse and Xtext, a minimal amount of implementation effort is necessary to provide a platform for portfolio specification and system configuration generation.

The approach is highly flexible because the possibility to define a DSL meets perfectly the domain requirements (a graphical DSL is also possible) and the possibility to create a code generator from the Xtext syntax tree allows to support various different target system.

Distributed modeling of components with clean dependency specifications supports parallel model editing (each component is modeled by its expert, supports the handling of large, complex, real-world portfolios and helps to avoid errors and therefore supports maintainability (small parts are easier to keep consistent than a monolithic system)

The resulting system configuration target schemes are concise and non redundant.

## Description

The invention pertains to a method for integrated modeling of a product portfolio by use of a computer program.

Companies, which sell complex products consisting of a set of components from a component portfolio as for example suppliers in the field of rail automation, who offer a broad range of components, like electronic switching units, train control systems, operator stations, railroad crossing control systems, etc. are challenged with the problem, that for all these components, different variants and versions exist and for a concrete customer and project, a subset of the portfolio components with their specific versions has to be selected and combined together.

Each component must be configured to meet the customer and project requirements. Usually, no integrated configuration tool is available, but each component is configured ("engineered") separately. Overlapping data are repeatedly configured. This makes interfaces between the different components necessary, which are established by proprietary interface formats or- even worse- by manual verification steps.

To avoid redundant engineering and servicing of different configuration technologies (usually, each component uses its own configurator), an integrated configuration technology should be used.

From the state of the art it is known, to use the so called methods of System of systems engineering, a methodology which deals with similar problems.

The two main approaches to solve the problem of portfolio modeling are either to separate the components (creating separate configurators for the components) or to specify one huge data model (merging all components of the portfolio).

By using the method of Separation typically different configurator technologies are used for the different components of a portfolio. The resulting system usually has a lot of redundant data (data replicated in the different configurators) and must provide interfaces between the configurators to either exchange data or map data to verify their consistency.

So the main disadvantages of this approach are redundant data and the necessity to generate interfaces between the configurators.

In a second approach - merging - a single, huge knowledge base is created, which contains all data of all components of the portfolio.

The main disadvantages of this monolithic approach are as follows:
- the parallel editing/maintaining of such a big knowledge is challenging;
- keeping the knowledge base consistent is difficulty because of its size;
- creating a stripped knowledge base for a concrete product is nearly impossible, because the knowledge base elements are interlaced and have lost their connection to the components they belong to.

It is therefore object of the invention to provide one configuration platform working on a knowledge base (a kind of database schema) which embraces all components for a product.

According to the invention, this solution is provided with the method of claim 1.

By using the open-source frameworks Eclipse and Xtext, a minimal amount of implementation effort is necessary to provide a platform for portfolio specification and system configuration generation.

The approach is highly flexible because the possibility to define a DSL meets perfectly the domain requirements (a graphical DSL is also possible) and the possibility to create a code generator from the Xtext syntax tree allows to support various different target system.

Distributed modeling of components with clean dependency specifications supports parallel model editing (each component is modeled by its expert, supports the handling of large, complex, real-world portfolios and helps to avoid errors and therefore supports maintainability (small parts are easier to keep consistent than a monolithic system)

The resulting system configuration target schemes are concise and non redundant.

By using Xtext, a modern editor with excellent usability for the DSL comes for free and allows syntax checking, syntax colouring, text completion, occurance marking etc.

The method according to the invention is exemplified with an example shown in the figures.
Fig.1 shows an example of a portfolio and system configuration.
Fig.2 shows a screenshot of an example for an Eclipse/Xtext portfolio modeling.

The focus of the present invention is the integrated modeling (~ specification of the knowledge bases) for all components of a portfolio motivated by the following goals:
- to provide a platform such that a separate model can be built for each component, not one huge, common model for all components of the portfolio. This reduces complexity in model editing (parallelization of work) and maintenance.
- To enable the reuse of knowledge already defined in another component or in a base component, avoiding redundancies in the database schema.
- To create a specific knowledge base for a concrete project from all component knowledge bases of the portfolio, containing only those data necessary for the components used.

Having in mind these goals, two problems occur, which can be described as follows:

### Problem 1:

Given: A portfolio, i.e. a set of components which are loosely coupled, sharing some common knowledge, and having dependencies among each other.
Wanted: An editor for writing the knowledge bases for each component separately with the possibility to include data from other components and to extend/modify them.

### Problem 2:

Given: The set of knowledge bases for all components of a portfolio (see Problem 1) and requirements for creating a configurator for a concrete project.
Wanted: The set of all components needed to realize the requirements for the concrete project (also called "system configuration" because the configured product is a complex system of complex components).

The invention is based on the following formal concept for modeling a product portfolio and for deriving system configurations.

The main design criteria are:
It must be possible that the different parts of a portfolio (the "components") are specified and maintained separately by different knowledge engineers.

Redundancies in the component models should be avoided. E.g., if in a component B a class Cis needed which is already defined in component A, then it should be possible that component B uses the A version of class C and extendor modify it when necessary.

Therefore, it must be possible that the dependencies between the different components are defined in a clean and declarative way.

A system configuration is the subset of the components of a portfolio which is needed to realize a concrete product. The specification of a system configuration from a portfolio model should be possible in an easy way. The system configuration should be minimal in the sense that no components are contained which aren't necessary.

A component is the description of a part of a product portfolio which may be independent or interacting with other components.

A component is described by a set of classes (which may be grouped into packages), along with their attributes, associations, rules and constraints. Associations or subclass relationships on classes within a component constitute a component network.

Associations or subclass relationships between different components constitute a network of components. Such intercomponent relationships represent dependencies between components. We say that component A "uses" component B (or "is dependent of'), if classes from A use classes or properties from classes of B. We don't allow direct or indirect cycles in the dependency links.

A portfolio Pis a directed, acyclic graph <C(P), E(P)>, where the nodes C(P) is the set of all components, and the edges E(P)

is the set of all directed depenceny links ("uses" links) between the components C(P).

A system configuration SC induced by a set of components C' ⊆ C(P) is a minimal subset of C(P) with the following properties:
(1) C' ⊆ SC
(2) if node n1 ∈ SC and edge n1->n2 ∈ E(P), then n2 ∈ SC.

In other words, a system configuration on a selected set of components represents a minimal subset of all components of the portfolio containing the selected components and additionally all components which are used directly or indirectly from the selected components.

The task of specifying a system configuration is then simple: The user picks the components he needs for his product and this set of components can be automatically completed to a system configuration by following the dependency links "outside" the set of selected components, resulting in a complete and minimal set of components needed.

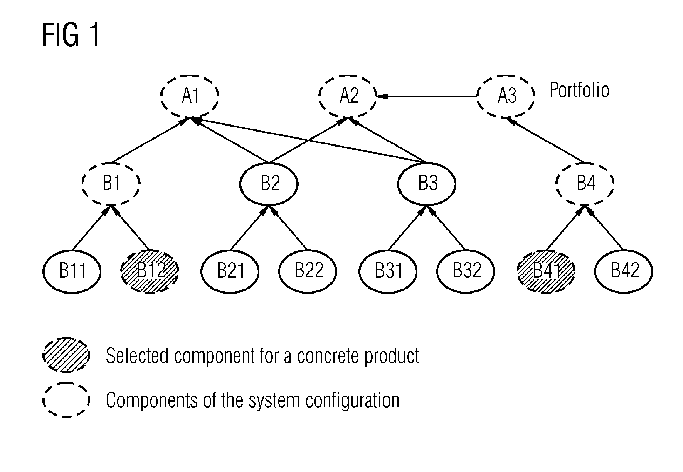

Figure 1 sketches an exemplary portfolio graph and a system configuration derived from a set of selected components B12, B41 and B41 for a concrete product.

According to the invention Eclipse and Xtext are used for modeling of portfolios and system configurations.

Eclipse [2], version 3.6 or higher, is an open-source integrated software development environment (IDE). In an Eclipse workspace, projects can be created and edited. An Eclipse project can use other Eclipse projects in its reference scope.

Xtext [3], version 1.0 or higher, is an open-source framework for developing domain-specific languages (DSL). The user specifies a grammar, and X text automatically creates a parser and a class model! for the syntax tree for easy programmatic access to the objects defined in a DSL program. As part of the Eclipse Modelling Framework [4], Xtext provides a fully-featured Eclipse-based editor for a specified DSL.

A component can be modeled in form of an Eclipse project. Because each domain has different requirements on the language constructs necessary to specify a component model in a natural way, we don't prescribe a fixed modeling language here, but we propose to define a domain-specific language (DSL). For defining that DSL, Xtext with its clean integration into the Eclipse Modelling Framework is a good choice.

If a component A uses another component B, project A must be registered in the build path of project B. Then all the elements of A (classes, attributes, associations) are visible and usable in B. Elements of other components which are not registered in B are not visible to B.

In the present example a text-based DSL is used because it is very easy to implement with X text. Another possibility is the usage of a graphic-based language such as UML to specify the component models.

A graphical view for presenting the component graph with its dependencies supports the organization of the components within the product portfolio. To define a system configuration for a concrete product, the user can pick the components needed, and a completion algorithm creates the minimal set of components for the system configuration. Then, a complete and consistent system configuration database schema can automatically be created from the system configuration components.

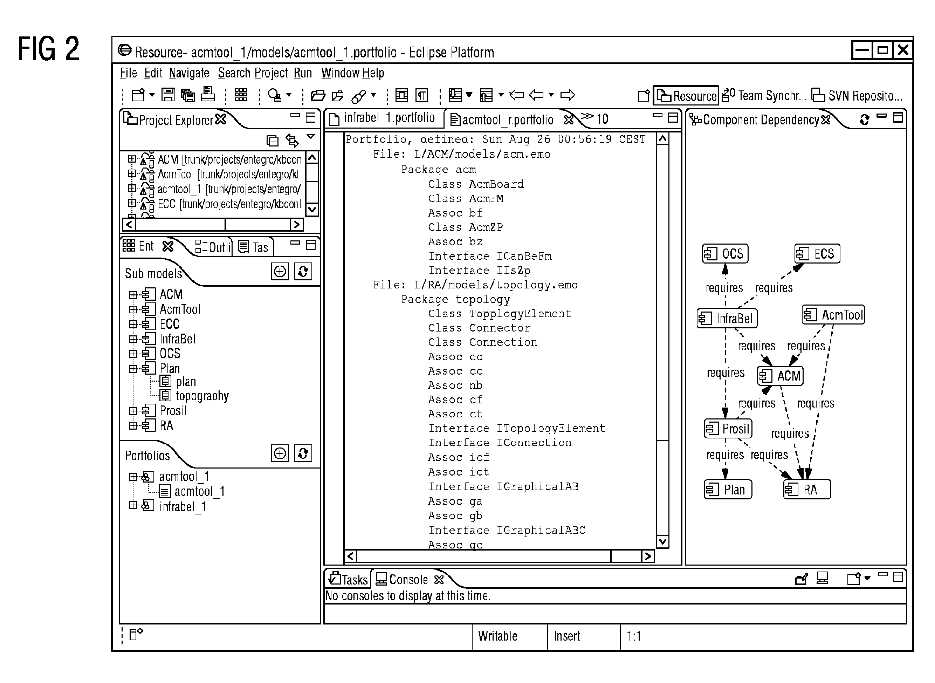

See Figure 2 for a screenshot of an Eclipse/Xtext example in the area of rail automation.

From the components (described in the DSL language) of a system configuration, a database schema for the target system can automatically be derived. The target system is usually a configuration system based on a standard or a proprietary database system. Thus, schema generation must be implemented for each domain, specific for the DSL and the kind of target system.

Examples of target systems are: COM OS, a platform for integrated engineering and Oracle, a relational database system.

This approach allows for a clean, distributed modeling of all components of a portfolio, and provides at the same time the fast realization of very specific target systems by an automatic generation process. Dependencies between classes of different components are automatically resolved. The resulting schema will have a similar form and similar properties as if it was made specifically for the given system configuration.

Example: Let component A have a class C with attributes a1 and a2. Component A1 and A2 depend on A. A1 defines its class Cas a subclass of A.C with the modification that it adds attribute a3. A2 defines its class Cas a subclass of A.C with the modification that it doesn't need attribute a2, but adds attribute a4.

The target schema of C for a system configuration (A1, A) will have the attributes a1, a2, and a3.

The target schema of C for a system configuration (A2, A) will have the attributes a1, a4.

The generation of the target schema is straight-forward. Xtext provides a full syntax tree of the component specification. This tree can be traversed and mapped to target schema expressions.

The following steps are necessary to create and maintain a portfolio for a specific domain and to generate system configurations for product orders:
- Design an adequate DSL which is expressive enough to model the components of the portfolio
- Implement a grammar for the DSL with X text
- Implement a schema code generation using the syntax tree data structures of X text and the domain-specific target system specification
- Design the components of the portfolio and specify them as Eclipse projects using the Xtext system (editor, parser, code completion, ... ).
- Specify the dependencies between the components.
- Visualize the components graph in the graphical portfolio editor
- Define a system configuration by picking the needed components. The system configuration completion function will complete the selected components to a self-contained set of components.
- Create the target schema for the system configuration using the schema code generation.

## Claims

1. Method for integrated modeling of a product portfolio by use of a computer, **characterized by** the use of Eclipse and Xtext for modeling of portfolios and system configurations.

2. Method according to claim 1, **characterized in that** the product portfolio comprises components of complex products for rail automation, as electronic switching units, train control systems, operator stations, railroad crossing control systems.
